# EUROPEAN PATENT APPLICATION

(11) **EP 4 746 252 A1**
(43) Date of publication of application: **20.05.2026**
(21) Application number: 24839339.9
(22) Date of filing: 24.05.2024
(51) Int. Cl.: H02K 1/18, H02K 15/02

(54) **CORE BLOCK, STATOR CORE, AND MOTOR**

(30) Priority: 12.07.2023 JP 2023114774
(71) Applicant: Panasonic Intellectual Property Management Co., Ltd., Kadoma-shi, Osaka 571-0057 (JP)
(72) Inventor: HAMATANI Takuto, Osaka 571-0057 (JP)
(74) Representative: SSM Sandmair
(86) International application number: PCT/JP2024/019269
(87) International publication number: WO 2025/013442

(57) **Abstract**

A core block is a core block in a stator core in which a plurality of core blocks sequentially adjacent including a first core block, a second core block, and a third core block are annularly connected, the core block including: a yoke portion extending in a circumferential direction of the stator core; and a tooth portion extending from the yoke portion toward a center of the stator core, in which the yoke portion includes a first end portion that is one end portion in the circumferential direction and a second end portion that is the other end portion in the circumferential direction, the first end portion includes a first connection surface to which the first core block adjacent among the plurality of core blocks is connected, and a protrusion at least partially protruding from the first connection surface, the second end portion includes a second connection surface to which the third core block adjacent among the plurality of core blocks is connected, and a recess at least partially recessed from the second connection surface, an outline of the protrusion and an inner shape line of the recess include arcs constituting circles having a same center, and the protrusion has a shape that can be inserted into the recess in a specific direction, and has a shape that is non-removable from the recess in the specific direction by being inserted into the recess and rotated.

## Description

### TECHNICAL FIELD

The present disclosure relates to a core block constituting a stator core of a motor, a stator core, and the motor.

### BACKGROUND ART

Motors are used in various electric appliances such as household appliances such as an air conditioner and a washing machine, and industrial appliances. As the motor, a commutator motor using a brush and a brushless motor not using a brush are known. The brushless motor includes, for example, a rotor having a magnet and a stator having a stator core around which a coil is wound.

As this type of motor, a motor using a stator in which a stator core is divided into a plurality of core blocks and the plurality of core blocks are connected in an annular shape is known (see PTL 1). In this case, for example, each of the plurality of core blocks has an arc-shaped yoke portion and a teeth portion protruding from the yoke portion. A recess is provided at one end portion of the yoke portion. A protrusion is provided at the other end portion of the yoke portion. When the two core blocks are connected to each other, the protrusion provided in the yoke portion of one core block and the recess provided in the yoke portion of the other core block are fitted to each other.

However, in the motor disclosed in PTL 1, it is necessary to slide the core block in a thickness direction (an axial direction of a rotating shaft) when connecting the two core blocks. Therefore, when the core block is connected to a core block having a coil wound in advance, it is necessary to lengthen a jumper wire between coils wound around the two core blocks by at least sliding amount of the core block in the thickness direction. As a result, wire processing of the jumper wire is complicated, and a space factor of the coil decreases.

### Citation List

### Patent Literature

PTL 1: International Publication No. 2016/002174

### SUMMARY OF THE INVENTION

The present disclosure has been made to solve such a problem. An object of the present disclosure is to provide a plurality of core blocks that can be connected to each other without sliding in the thickness direction.

In order to achieve the above object, one aspect of a core block according to the present disclosure is a core block in a stator core in which a plurality of core blocks sequentially adjacent including a first core block, a second core block, and a third core block are annularly connected, the core block including: a yoke portion extending in a circumferential direction of the stator core; and a tooth portion extending from the yoke portion toward a center of the stator core, in which the yoke portion includes a first end portion that is one end portion in the circumferential direction and a second end portion that is the other end portion in the circumferential direction, the first end portion includes a first connection surface to which the first core block adjacent among the plurality of core blocks is connected, and a protrusion at least partially protruding from the first connection surface, the second end portion includes a second connection surface to which the third core block adjacent among the plurality of core blocks is connected, and a recess at least partially recessed from the second connection surface, an outline of the protrusion and an inner shape line of the recess include arcs constituting circles having a same center, and the protrusion has a shape that is insertable into the recess in a specific direction, and has a shape that is non-removable from the recess in the specific direction by being inserted into the recess and rotated.

When a diameter of a circle constituting the protrusion is φ1 and a width of a portion of the protrusion inserted into the recess is W1, φ1 > W1 is preferably satisfied.

When a diameter of a circle constituting the recess is φ2 and a width of a portion of the recess into which the protrusion is inserted is W2, φ2 > W2 is preferably satisfied.

It is preferable that the first end portion is formed with a groove located on an inner side of the protrusion and recessed from the first connection surface, an inner shape line of an outer side portion of the groove forms an outline of the protrusion, the second end portion is formed with a projection located on an inner side of the recess and protruding from the second connection surface, an outline of an outer side portion of the projection forms an inner shape line of the recess, and the projection has a shape that is insertable into the groove.

The groove and the projection preferably extend outward in a curved manner.

It is preferable that an inner shape line on an inner side of the groove is an arc, and when a radius of a circle constituting the arc of the inner shape line on the inner side of the groove is RE and a diameter of a circle constituting the protrusion is φ1, RE > φ1 is satisfied.

It is preferable that an outline on an outer side of the projection is an arc, and when a radius of a circle constituting the arc of the outline on the outer side of the projection is RG, RG < RE is satisfied.

It is preferable that a tip end of the projection is one end of an opening width of the recess, and when a straight line passing through a center of a circle constituting the recess and a center of the stator core is L1, a straight line passing through the center of the circle constituting the recess and the tip end of the projection is L2, and an angle formed by the L1 and the L2 is θ1, θ1 > 45° is satisfied.

The other end of the opening width of the recess is preferably located at a position retracted from the L1.

A first hollow is formed in an outer side portion of the protrusion, and the first hollow may have an abutment surface that can abut an inner surface of the recess when the protrusion is inserted into the recess in the specific direction.

A second hollow may be formed at a position intersecting an inner side portion of the protrusion when the first connection surface is extended.

One aspect of a stator core according to the present disclosure is a stator core formed by multiple connection of the core blocks, in which the plurality of core blocks are connected by fitting the recess of the first core block out of two adjacent core blocks and the protrusion of the second core block out of the two adjacent core blocks.

One aspect of a motor according to the present disclosure includes: a stator including the stator core; and a rotor that rotates by a magnetic force of the stator.

According to the present disclosure, it is possible to connect the plurality of core blocks without sliding the core blocks in the thickness direction.

### BRIEF DESCRIPTION OF THE DRAWINGS

Fig. 1 is an external perspective view of a motor according to an exemplary embodiment.
Fig. 2 is an exploded perspective view of the motor according to the exemplary embodiment.
Fig. 3 is a sectional view of the motor according to the exemplary embodiment taken along a plane passing through a rotating shaft.
Fig. 4 is a sectional view of the motor according to the exemplary embodiment taken along a plane orthogonal to the rotating shaft.
Fig. 5 is a perspective view of a stator according to the exemplary embodiment.
Fig. 6A is a top view of two core blocks in a coupled state among three sequentially adjacent core blocks.
Fig. 6B is a top view of other two core blocks in a further connected state including a part of the two core blocks illustrated in Fig. 6A among the three sequentially adjacent core blocks.
Fig. 7 is an enlarged view of a connection portion in two core blocks before connection.
Fig. 8 is an enlarged view of a connection portion in two core blocks before connection.
Fig. 9 is a top view of the two core blocks when the two core blocks are connected.
Fig. 10 is a view illustrating movement of the core blocks when the two core blocks are connected.

### DESCRIPTION OF EMBODIMENT

Hereinafter, exemplary embodiments of the present disclosure will be described with reference to the drawings. The exemplary embodiments to be described below illustrate specific examples of the present disclosure. Therefore, numerical values, constituent elements, arrangement positions and connection forms of the constituent elements, steps, order of the steps, and the like described in the following exemplary embodiments are examples, and are not intended to limit the present disclosure. Therefore, among the constituent elements in the following exemplary embodiments, constituent elements not described in independent claims indicating the highest concept of the present disclosure are described as optional constituent elements.

Each of the drawings is a schematic view and is not necessarily strictly illustrated. In each drawing, substantially the same components as those in other drawings are denoted by the same reference numerals, and redundant description will be omitted or simplified.

In the present specification, a radial direction of stator 10 and rotor 20 is referred to as a "radial direction", and a rotation direction of rotor 20 is referred to as a "circumferential direction". That is, a direction extending from axis C of rotating shaft 21, with axis C as a center, is the "radial direction", and a direction around axis C of rotating shaft 21, with axis C as the center, is the "circumferential direction". Therefore, the "radial direction" is a direction orthogonal to an extending direction of axis C of rotating shaft 21. In the present specification, the terms "upper" and "lower" do not necessarily refer to an upward direction (vertically upward) and a downward direction (vertically downward) in absolute space recognition.

### (Exemplary embodiment)

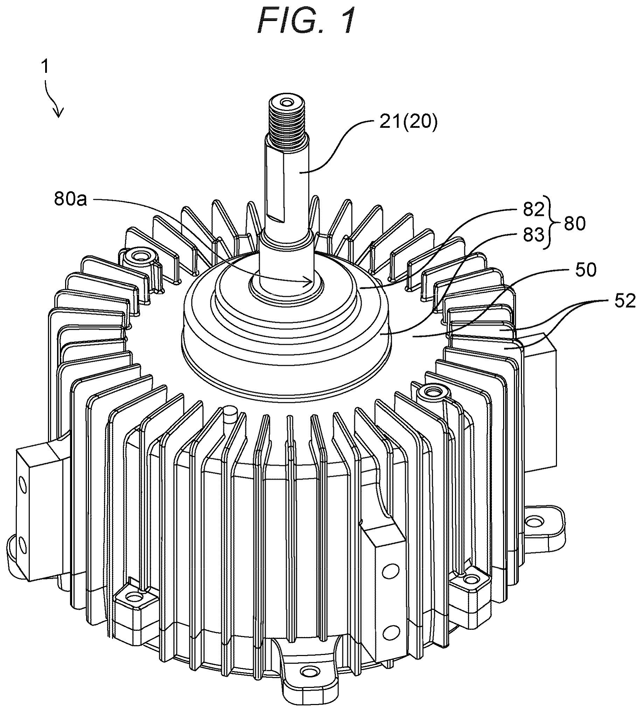

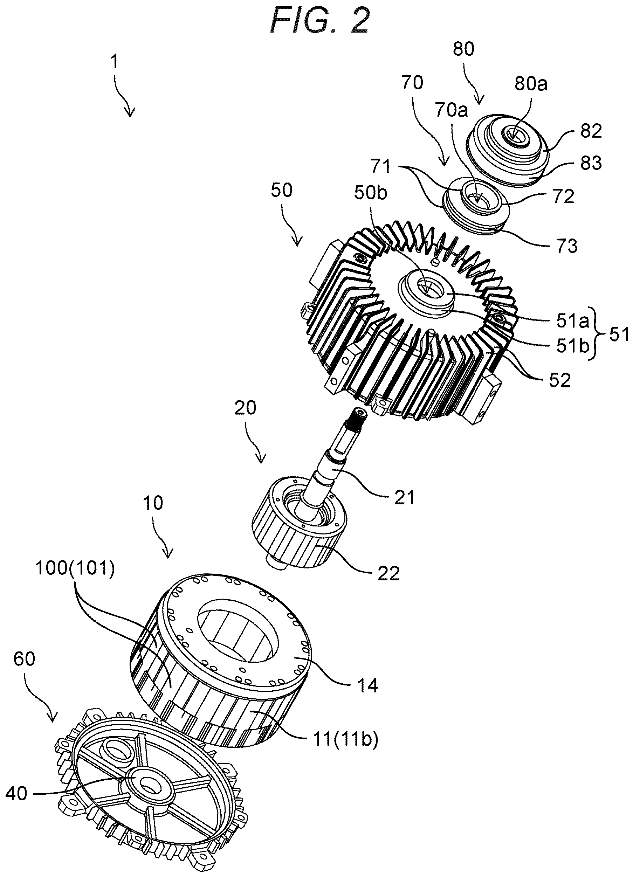

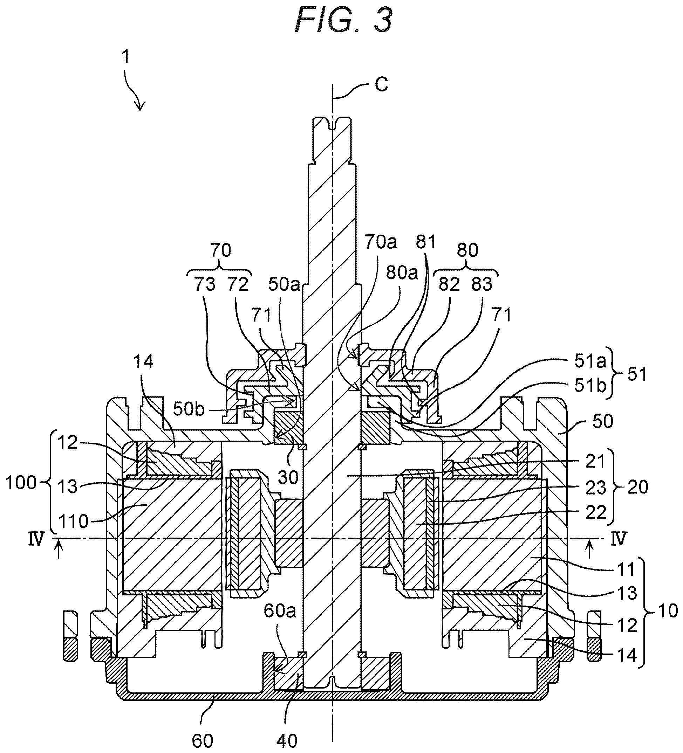

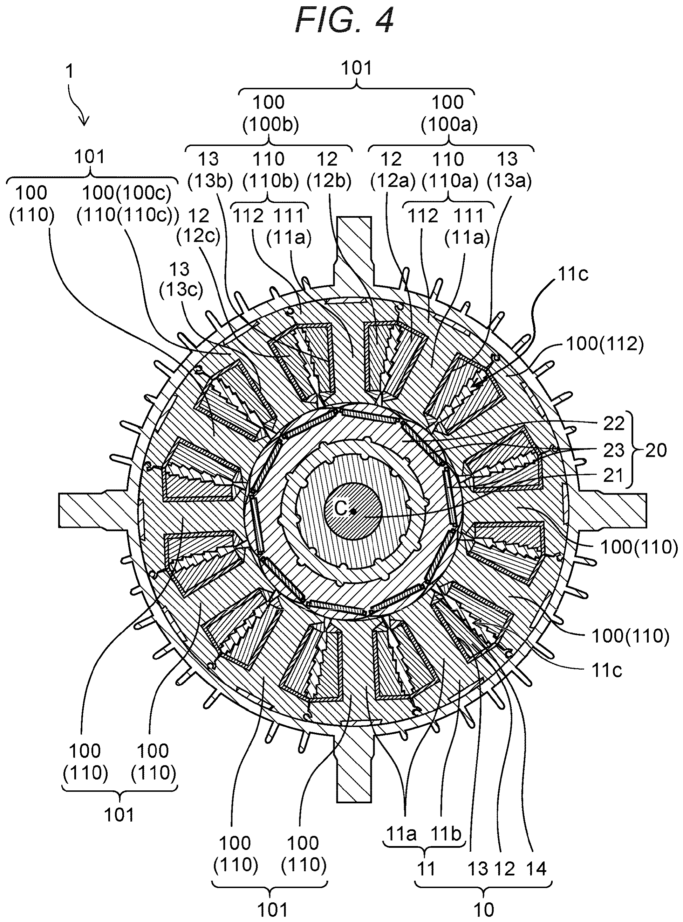

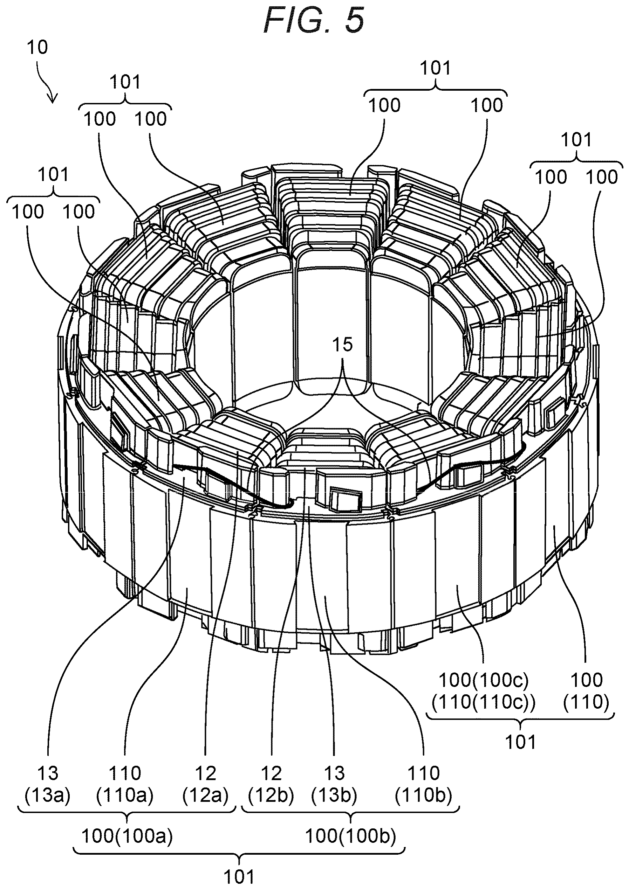

An overall configuration of motor 1 according to an exemplary embodiment will be described with reference to Figs. 1 to 5. Fig. 1 is an external perspective view of motor 1 according to the exemplary embodiment. Fig. 2 is an exploded perspective view of motor 1 according to the exemplary embodiment. Fig. 3 is a sectional view of motor 1 according to the exemplary embodiment taken along a plane passing through rotating shaft 21. Fig. 4 is a sectional view of the motor according to the exemplary embodiment taken along a plane orthogonal to rotating shaft 21. Fig. 4 illustrates a section taken along line IV-IV in Fig. 3. Fig. 5 is a perspective view of stator 10 according to the exemplary embodiment. Figs. 3 to 5 schematically illustrate coil 12. Figs. 3 and 4 illustrate only a portion appearing in the section.

As illustrated in Figs. 1 to 4, motor 1 includes stator 10 and rotor 20 having rotating shaft 21. Motor 1 further includes first bearing 30, second bearing 40, first bracket 50, second bracket 60, first cover 70, and second cover 80.

Motor 1 is a brushless motor. As illustrated in Figs. 3 and 4, motor 1 is an inner rotor type motor in which rotor 20 is disposed on an inner side of stator 10. That is, stator 10 is disposed to surround rotor 20. Therefore, rotor 20 rotates about axis C of rotating shaft 21 as a rotation center on an inner side of stator 10.

As illustrated in Figs. 3 and 4, stator 10 is disposed facing rotor 20 with a minute air gap interposed between stator 10 and rotor 20. Specifically, stator 10 is disposed to surround rotor core 22 of rotor 20.

Stator 10 generates a magnetic force acting on rotor 20. Specifically, stator 10 has a configuration in which a plurality of N poles and S poles are alternately and repeatedly present in the rotation direction so as to generate a magnetic flux on an air gap surface with rotor core 22 of rotor 20. Stator 10 constitutes a magnetic circuit together with rotor 20.

Stator 10 constitutes an armature. Stator 10 includes stator core 11 (stator iron core), coil 12 wound around stator core 11, and insulator 13. As illustrated in Figs. 2 to 4, stator core 11, coil 12, and insulator 13 are covered with mold resin 14. Fig. 5 illustrates stator 10 in a state before being covered with mold resin 14.

Stator core 11 is an iron core that generates the magnetic force for rotating rotor 20. As illustrated in Fig. 4, stator core 11 includes teeth 11a and yoke 11b. Stator core 11 includes a plurality of teeth 11a.

The plurality of teeth 11a are provided on an inner side of yoke 11b. Therefore, the plurality of teeth 11a protrude from yoke 11b toward rotor 20. That is, the plurality of teeth 11a protrude toward axis C of rotating shaft 21. Specifically, the plurality of teeth 11a radially extend in a direction (radial direction) orthogonal to the extending direction of axis C of rotating shaft 21. The plurality of teeth 11a are arranged at equal intervals in the circumferential direction while forming slot 11c between two adjacent teeth 11a. Stator core 11 has 12 teeth 11a. That is, the number of slots of stator 10 is 12.

An extending portion extending to both sides in the circumferential direction is formed at an extending tip end of each of teeth 11a. An inner peripheral surface located at the tip end of tooth 11a including the extending portion forms a magnetic pole surface facing an outer peripheral surface of rotor 20. In two adjacent teeth 11a, there is a gap (slot opening) between the extending portion of one tooth 11a and the extending portion of the other tooth 11a.

As illustrated in Fig. 4, yoke 11b is formed in an annular shape so as to surround rotor 20. Yoke 11b is a back yoke located on an outer side of the plurality of teeth 11a. Yoke 11b is formed in an annular shape about axis C of rotating shaft 21.

Coil 12 is a stator coil which is an armature winding of stator 10. Coil 12 is a winding coil wound around stator core 11 so as to generate a magnetic force acting on rotor 20 when a current flows through the coil. Specifically, as illustrated in Figs. 3 and 4, coil 12 is constituted by a conductive wire wound around each tooth 11a via insulator 13. Coil 12 is a concentrated winding coil wound around each tooth 11a. Coil 12 is housed in slot 11c of stator core 11. The conductive wire constituting coil 12 is, for example, an insulating coated wire. The conductive wire constituting coil 12 includes a conductive wire made of a conductive material such as copper or aluminum as a core wire, and an insulating film coating the conductive wire.

Coil 12 is a three-phase winding so that rotor 20 can be rotated by a three-phase synchronous motor. Specifically, coil 12 includes unit coils of three phases of U-phase, V-phase, and W-phase that are electrically different from each other by 120 degrees. That is, coil 12 wound around each tooth 11a is energized and driven by three-phase alternating current supplied to each of the U-, V-, and W-phases. Thus, a main magnetic flux of stator 10 is generated in each tooth 11a. That is, each tooth 11a is a magnetic pole tooth. Each tooth 11a is an electromagnet that generates the magnetic force when the current flows through coil 12.

Coil 12 of each phase is electrically connected to a circuit board (not illustrated). Specifically, coil 12 of each phase is electrically connected to a winding connection portion of the circuit board via a lead wire, a connection terminal, or the like. The circuit board is a printed wiring substrate in which a plurality of wirings made of a conductive material such as copper are formed in a predetermined pattern. Three connection terminal portions corresponding to the U-phase, the V-phase, and the W-phase are formed in each of the plurality of wirings. A plurality of electronic components (not illustrated) for generating the current to be supplied to the plurality of coils 12 of stator 10 are mounted on the circuit board. The plurality of electronic components constitute a power supply circuit that generates three-phase alternating current of the U-phase, the V-phase, and the W-phase.

As illustrated in Fig. 4, stator core 11 is divided into a plurality of core blocks 110 (divided cores). That is, stator core 11 includes the plurality of core blocks 110. Specifically, stator core 11 is divided into the plurality of core blocks 110 according to the number of teeth 11a. In stator core 11, one tooth 11a exists in each core block 110. Since stator core 11 has 12 teeth 11a, stator core 11 is divided into 12 core blocks 110.

Each of the plurality of core blocks 110 is formed by stacking a plurality of steel plates. Specifically, each core block 110 is a stacked body in which a plurality of punched electromagnetic steel plates are stacked in the extending direction of axis C of rotating shaft 21. The plurality of electromagnetic steel plates are fixed to each other by, for example, crimping.

The plurality of core blocks 110 are annularly connected. Specifically, the plurality of core blocks 110 are connected in an annular shape. That is, stator core 11 is formed by connecting the plurality of core blocks 110 in the annular shape. In the present exemplary embodiment, 12 core blocks 110 are arranged to form the annular shape. Two adjacent core blocks 110 are connected to each other. Coil 12 is wound around each of the plurality of core blocks 110. Specifically, coil 12 is wound around tooth 11a of each core block 110. A detailed configuration of core block 110 will be described later.

Insulator 13 has a portion interposed between stator core 11 and coil 12. Insulator 13 covers stator core 11. Specifically, insulator 13 covers at least tooth 11a of stator core 11. Similarly to coil 12, insulator 13 is provided on each of the plurality of teeth 11a. That is, stator 10 includes the plurality of insulators 13.

Specifically, insulator 13 is provided for each core block 110. Insulator 13 has a frame-shaped frame portion (coil bobbin) around which coil 12 is wound as a portion located between tooth 11a and coil 12 in each core block 110. Insulator 13 is, for example, a resin molded article made of an insulating resin material such as polybutylene terephthalate (PBT).

As illustrated in Figs. 4 and 5, one core block 110, one coil 12, and one insulator 13 constitute stator block 100. Stator block 100 is an intermediate assembly used for stator 10. That is, stator block 100 is an intermediate component used in manufacturing stator 10. As illustrated in Figs. 4 and 5, stator 10 is formed by annularly connecting a plurality of the stator blocks 100. Stator 10 is formed by connecting 12 stator blocks 100 in the annular shape. In stator 10, two adjacent stator blocks 100 are connected. Two connected stator blocks 100 are stator block connection structure 101. As illustrated in Fig. 5, in two connected stator blocks 100, coil 12 of one stator block 100 and coil 12 of the other stator block 100 are connected by jumper wire 15. Specifically, one end portion of jumper wire 15 is connected to an end point of coil 12 of one stator block 100. The other end portion of jumper wire 15 is connected to a start point of coil 12 of the other stator block 100.

Three stator blocks 100 constituting stator block connection structure 101 are first stator block 100a, second stator block 100b, and third stator block 100c, which are connected to each other. First stator block 100a includes first core block 110a, first coil 12a wound around first core block 110a, and first insulator 13a having a portion positioned between first core block 110a and first coil 12a. Second stator block 100b includes second core block 110b, second coil 12b wound around second core block 110b, and second insulator 13b having a portion positioned between second core block 110b and second coil 12b. Third stator block 100c includes third core block 110c, third coil 12c wound around third core block 110c, and third insulator 13c having a portion positioned between third core block 110c and third coil 12c.

First core block 110a, second core block 110b, and third core block 110c, which are sequentially adjacent to each other, are connected. First coil 12a and second coil 12b are connected by jumper wire 15. Specifically, jumper wire 15 connects a winding end position of first coil 12a and a winding start position of second coil 12b.

Rotor 20 illustrated in Figs. 2 to 4 rotates by the magnetic force generated by stator 10. In rotor 20, the plurality of N poles and S poles that generate the magnetic flux over the rotation direction (circumferential direction) are alternately and repeatedly present. Thus, rotor 20 generates the magnetic force acting on stator 10. A direction of the magnetic flux generated by rotor 20 is a direction orthogonal to the extending direction (axial direction) of axis C of rotating shaft 21. That is, the direction of the magnetic flux generated by rotor 20 is the radial direction.

As illustrated in Figs. 3 and 4, rotor 20 includes rotating shaft 21, rotor core 22, and permanent magnet 23. Rotor 20 is a permanent magnet embedded-type rotor (interior permanent magnet (IPM) rotor) in which permanent magnet 23 is embedded in rotor core 22. Therefore, motor 1 is an IPM motor.

Rotating shaft 21 is an elongated shaft. Rotating shaft 21 is, for example, a metal rod. Rotating shaft 21 is fixed to rotor core 22. Specifically, rotating shaft 21 is inserted into a through-hole provided at a center of rotor core 22 and fixed to rotor core 22 so as to extend on both sides of rotor core 22 in the extending direction of axis C. Rotating shaft 21 is fixed to rotor core 22 via a holder that holds rotor core 22. However, this is not limited thereto. For example, rotating shaft 21 may be directly fixed to rotor core 22 by being press-fitted or shrink-fitted into the through-hole of rotor core 22.

Rotor core 22 is a stacked body in which the plurality of steel plates are stacked in the extending direction (axial direction) of axis C of rotating shaft 21. Each of the plurality of steel plates is, for example, a punched electromagnetic steel plate formed in a predetermined shape. The plurality of steel plates are fixed to each other by, for example, crimping. Rotor core 22 is not limited to the stacked body of the plurality of steel plates. Rotor core 22 may be a bulk body made of a magnetic material.

Permanent magnet 23 is inserted into a magnet insertion hole provided in rotor core 22. 10 magnet insertion holes are provided in rotor core 22 at equal intervals over the circumferential direction. Therefore, rotor 20 has 10 permanent magnets 23 arranged at equal intervals over the circumferential direction. That is, the number of poles of motor 1 is 10. Permanent magnet 23 is a sintered magnet, but may be a bonded magnet.

As illustrated in Fig. 3, rotating shaft 21 of rotor 20 is supported by first bearing 30 and second bearing 40. First bearing 30 and second bearing 40 are bearings that rotatably support rotating shaft 21. First bearing 30 supports a portion of rotating shaft 21 protruding from one side of rotor core 22. On the other hand, second bearing 40 supports a portion of rotating shaft 21 protruding from the other side of rotor core 22. First bearing 30 and second bearing 40 are, for example, ball bearings. However, first bearing 30 and second bearing 40 are not limited thereto. For example, first bearing 30 and second bearing 40 may be other types of bearings such as thrust bearings.

First bracket 50 holds the first bearing 30. Specifically, first bearing 30 is housed and fixed in recess 50a provided in first bracket 50. Second bracket 60 holds second bearing 40. Specifically, second bearing 40 is housed and fixed in recess 60a provided in second bracket 60. First bracket 50 and second bracket 60 are made of a metal material or a resin material.

First bracket 50 and second bracket 60 constitute an exterior of motor 1. That is, first bracket 50 and second bracket 60 are outer shell members of motor 1. First bracket 50 is a bottomed cylindrical frame (housing) having an opening as a whole. On the other hand, second bracket 60 is a bottom plate that closes the opening of first bracket 50. First bracket 50 and second bracket 60 are made of a metal material or a resin material. For example, first bracket 50 is a metal frame made of metal, and second bracket 60 is a resin plate made of resin.

First bracket 50 is formed with through-hole 50b through which rotating shaft 21 of rotor 20 passes. A part of rotating shaft 21 protrudes outward from first bracket 50 through through-hole 50b. A load such as a rotary fan is attached to a portion of rotating shaft 21 protruding outward from first bracket 50. That is, in rotating shaft 21, the portion protruding from first bracket 50 is an output shaft.

As illustrated in Fig. 3, first bracket 50 has bracket protruding portion 51 protruding outward in the extending direction of axis C of rotating shaft 21. Bracket protruding portion 51 includes bracket top plate portion 51a in which through-hole 50b is formed and bracket side plate portion 51b erected from an outer peripheral end portion of bracket top plate portion 51a. Specifically, bracket protruding portion 51 is formed in a bottomed cylindrical shape. Therefore, bracket top plate portion 51a has a disk shape. Bracket side plate portion 51b has a cylindrical shape. By providing bracket protruding portion 51, a step is formed on a bottom plate portion of first bracket 50. An inner portion of bracket protruding portion 51 is recess 50a.

As illustrated in Figs. 1 and 2, first bracket 50 includes a plurality of heat dissipation fins 52. Each of the plurality of heat dissipation fins 52 has a plate shape. The plurality of heat dissipation fins 52 are provided in first bracket 50 at equal intervals in the circumferential direction. Each of the plurality of heat dissipation fins 52 is formed to extend from an outer peripheral end portion of the bottom plate portion of first bracket 50 to a cylindrical side wall portion.

As illustrated in Fig. 3, first cover 70 is an inner cover located on an inner side of second cover 80. First cover 70 is fixed to first bracket 50. First cover 70 is formed with through-hole 70a through which rotating shaft 21 passes. Rotating shaft 21 passes through through-hole 70a. That is, rotating shaft 21 passing through through-hole 70a is not in contact with first cover 70. There is a gap between rotating shaft 21 and an inner surface of through-hole 70a. Therefore, even when rotating shaft 21 rotates, first cover 70 does not rotate.

Second cover 80 is an outer cover located on an outer side of first cover 70. Second cover 80 covers first cover 70 without coming into contact with first cover 70. That is, second cover 80 and first cover 70 are separated from each other. Second cover 80 is not in contact with first bracket 50 either.

Second cover 80 is fixed to rotating shaft 21 instead of first bracket 50. Therefore, when rotating shaft 21 rotates, second cover 80 rotates together with rotating shaft 21. In the present exemplary embodiment, second cover 80 is formed with through-hole 80a through which rotating shaft 21 passes. Second cover 80 is fixed to rotating shaft 21 in a state where rotating shaft 21 passes through through-hole 80a. In this case, second cover 80 and rotating shaft 21 are in contact with each other. For example, rotating shaft 21 and second cover 80 can be fixed by press-fitting rotating shaft 21 into through-hole 80a. Second cover 80 may be fixed to rotating shaft 21 without being in contact with rotating shaft 21. For example, a bush or the like may be inserted between through-hole 80a and rotating shaft 21, and second cover 80 and rotating shaft 21 may be fixed with a screw or the like.

As illustrated in Fig. 3, a plurality of outer protruding portions 71 protruding outward are provided on an outer side (a second cover 80 side) surface of first cover 70. That is, the plurality of outer protruding portions 71 protrude toward second cover 80. The plurality of outer protruding portions 71 are wall portions having a plate shape in a sectional view. The plurality of outer protruding portions 71 have an annular shape.

First cover 70 includes inner top plate portion 72 and inner side plate portion 73. Inner top plate portion 72 has a flat plate shape. Inner top plate portion 72 faces bracket top plate portion 51a of bracket protruding portion 51 of first bracket 50. Specifically, inner top plate portion 72 is in surface contact with bracket top plate portion 51a. Through-hole 70a of the first cover 70 is formed in a central portion of inner top plate portion 72. Inner side plate portion 73 is erected from an outer peripheral end portion of inner top plate portion 72. Inner side plate portion 73 faces bracket side plate portion 51b of bracket protruding portion 51 of first bracket 50. Specifically, inner side plate portion 73 has a cylindrical shape. Inner side plate portion 73 is in surface contact with bracket side plate portion 51b. First cover 70 is fixed to first bracket 50 by press-fitting inner side plate portion 73 into bracket protruding portion 51 of first bracket 50.

A plurality of inner protruding portions 81 protruding inward are provided on an inner side (a first cover 70 side) surface of second cover 80. That is, the plurality of inner protruding portions 81 protrude toward first cover 70.

Second cover 80 includes outer top plate portion 82 and outer side plate portion 83. Outer top plate portion 82 faces inner top plate portion 72 of first cover 70. Outer top plate portion 82 and inner top plate portion 72 are separated from each other and arranged at a predetermined distance. Outer top plate portion 82 has a step formed such that a central portion protrudes outward. Outer side plate portion 83 is erected from an outer peripheral end portion of outer top plate portion 82. Outer side plate portion 83 faces inner side plate portion 73 of first cover 70. Outer side plate portion 83 and inner side plate portion 73 are separated from each other and arranged at a predetermined distance. Second cover 80 and first bracket 50 are not in contact with each other. Therefore, there is a gap between a tip end of outer side plate portion 83 and bracket top plate portion 51a of first bracket 50.

A labyrinth structure is formed by the plurality of outer protruding portions 71 and the plurality of inner protruding portions 81 existing between first cover 70 and second cover 80. Thus, even if foreign matter such as water or dust enters from a gap between second cover 80 and first bracket 50, it is possible to suppress foreign matter reaching an inside of motor 1.

First cover 70 and second cover 80 are rubber covers made of a rubber material. Therefore, first cover 70 and second cover 80 have rubber elasticity. First cover 70 fixed to first bracket 50 functions as a drip-proof rubber. Second cover 80 that is fixed to rotating shaft 21 and rotating functions as a draining rubber.

When second cover 80 is made of a rubber material, second cover 80 can be fixed in close contact with rotating shaft 21. For example, by press-fitting rotating shaft 21 into through-hole 80a of second cover 80, second cover 80 can be fixed in close contact with rotating shaft 21 without a gap between rotating shaft 21 and through-hole 80a. When first cover 70 is made of a rubber material, first cover 70 can be easily fixed to bracket protruding portion 51 of first bracket 50. For example, by press-fitting first cover 70 into bracket protruding portion 51 of first bracket 50, first cover 70 can be fixed in close contact with bracket protruding portion 51 of first bracket 50.

As the rubber material constituting first cover 70 and second cover 80, chloroprene rubber (polychloroprene (CR)) having excellent impact resilience and aging resistance, ethylene propylene rubber (EPDM) having a small specific gravity and excellent heat resistance, cold resistance, and aging resistance, or the like can be used. First cover 70 and second cover 80 may be made of the same rubber material, or may be made of different rubber materials. When first cover 70 and second cover 80 are made of different rubber materials, first cover 70 (drip-proof rubber) on the inner side is preferably made of chloroprene rubber, and second cover 80 (draining rubber) on an outer side is preferably made of ethylene propylene rubber. An elastic force of the rubber material constituting second cover 80 on the outer side is preferably higher than that of the rubber material constituting first cover 70 on the inner side. First cover 70 and second cover 80 may be made of a material other than the rubber material. For example, first cover 70 and second cover 80 may be made of a resin material or a metal material other than the rubber material.

In motor 1 configured as described above, when coils 12 of stator 10 are energized, a field current flows through coils 12, and the magnetic flux is generated in stator 10 (stator core 11). Thus, the magnetic flux directed from stator 10 toward rotor 20 is generated. Specifically, the magnetic flux directed from each of the plurality of teeth 11a of stator core 11 of stator 10 toward rotor core 22 of rotor 20 is generated. In rotor 20, the magnetic flux passing through stator 10 is generated by permanent magnet 23 of rotor core 22. The magnetic force generated by interaction between the magnetic flux generated in stator 10 and the magnetic flux generated from permanent magnet 23 of rotor 20 becomes a torque that rotates rotor 20. Thus, rotor 20 rotates.

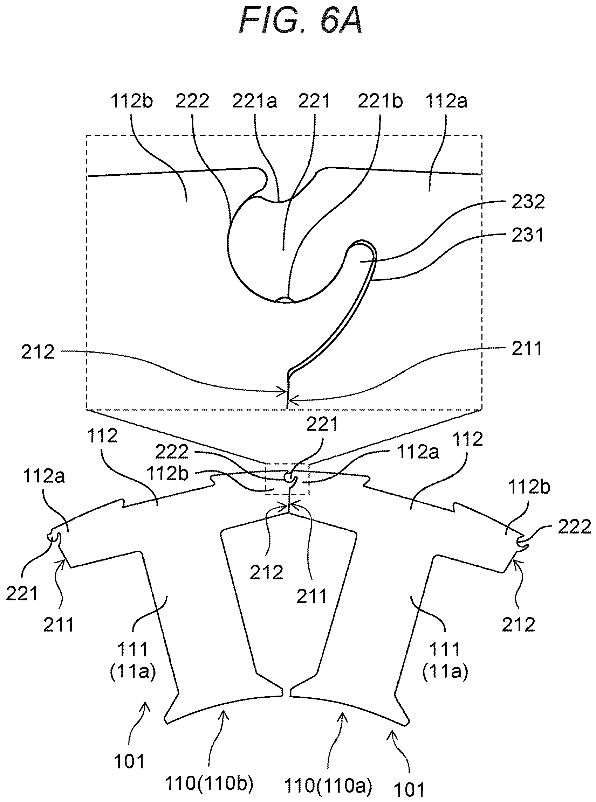

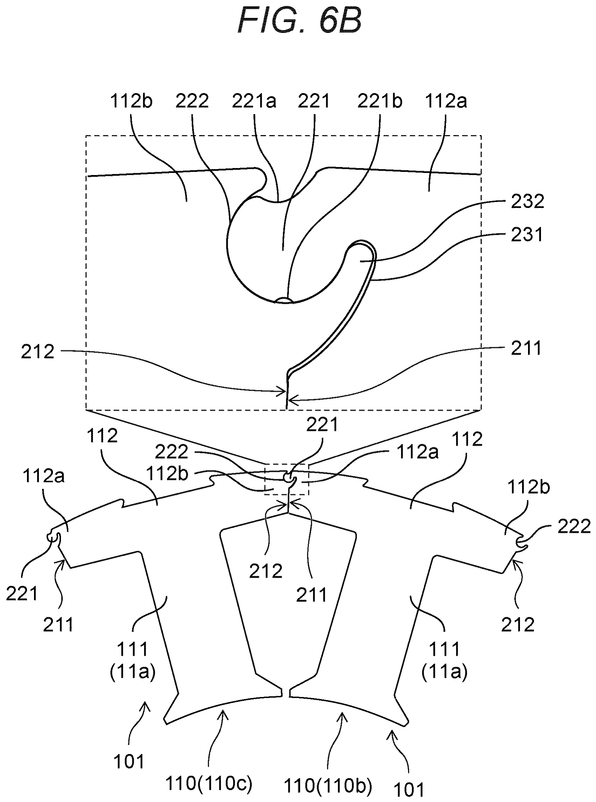

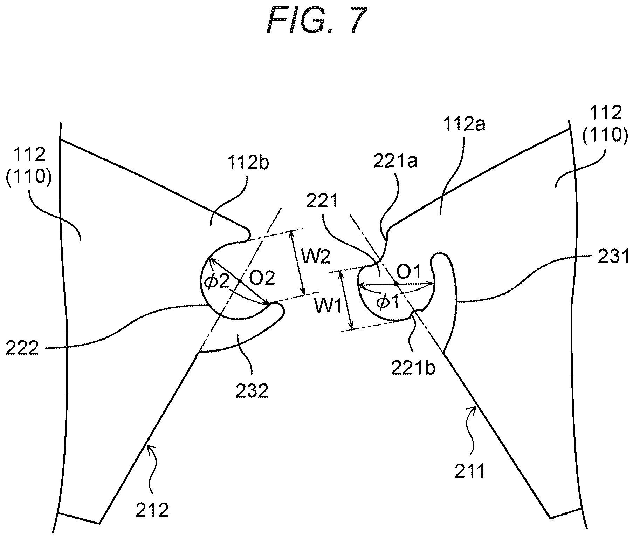

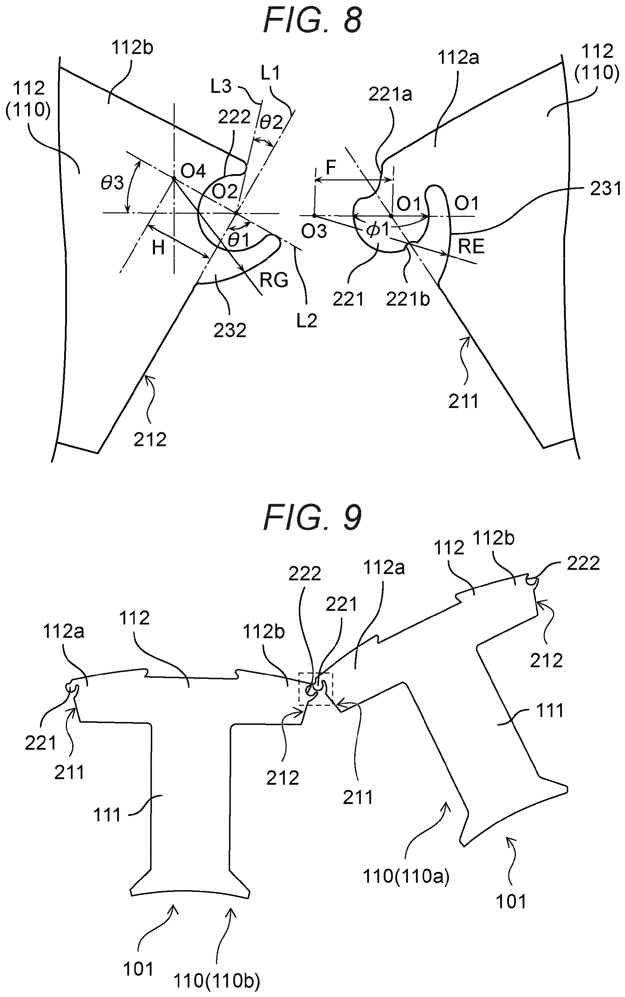

Next, a detailed configuration of core block 110 in stator 10 according to the present exemplary embodiment will be described with reference to Figs. 6A to 8 while referring to Fig. 4. Fig. 6A is a top view of two core blocks 110 (110a, 110b) in a coupled state among three sequentially adjacent core blocks 110. Fig. 6B is a top view of other two core blocks 110 (110b, 110c) in a further connected state including a part of two core blocks 110 illustrated in Fig. 6A among three sequentially adjacent core blocks 110. Fig. 7 is an enlarged view of a connection portion in two core blocks 110 before connection. Fig. 8 is an enlarged view of a connection portion in two core blocks 110 before connection.

As illustrated in Fig. 6A, each core block 110 (110a, 110b) includes tooth portion 111 and yoke portion 112. Similarly, as illustrated in Fig. 6B, each core block 110 (110b, 110c) includes tooth portion 111 and yoke portion 112. Tooth portion 111 is tooth 11a of stator core 11 illustrated in Fig. 4.

As illustrated in Fig. 4, tooth portion 111 is formed on an inner side of yoke portion 112. Tooth portion 111 extends from yoke portion 112 toward a central portion of stator core 11. Specifically, tooth portion 111 extends from yoke portion 112 toward rotating shaft 21. That is, tooth portion 111 extends to protrude inward in the radial direction of stator 10. Coil 12 is wound around tooth portion 111. Specifically, coil 12 is wound around tooth portion 111 via insulator 13.

Yoke portion 112 is a back yoke formed on an outer side of tooth portion 111. Yoke portion 112 extends in a circumferential direction of stator core 11. As illustrated in Fig. 6A, yoke portion 112 has first end portion 112a which is one end portion in the circumferential direction and second end portion 112b which is the other end portion in the circumferential direction. In two adjacent core blocks 110 (110a, 110b) among three sequentially adjacent core blocks 110, circumferential end surfaces of two adjacent yoke portions 112 are in contact with each other and connected. Similarly, as illustrated in Fig. 6B, yoke portion 112 has first end portion 112a which is the one end portion in the circumferential direction and second end portion 112b which is the other end portion in the circumferential direction. In two adjacent core blocks 110 (110b, 110c) among three sequentially adjacent core blocks 110, the circumferential end surfaces of two adjacent yoke portions 112 are in contact with each other and connected.

In yoke portion 112 of each core block 110, first end portion 112a has first connection surface 211 to which another core block 110 is connected, and protrusion 221 at least partially protruding from first connection surface 211. Second end portion 112b has second connection surface 212 to which another core block 110 is connected, and recess 222 at least partially recessed from second connection surface 212.

Specifically, as illustrated in Fig. 6B, in yoke portion 112 of second core block 110b, first end portion 112a has first connection surface 211 to which third core block 110c is connected, and protrusion 221 at least partially protruding from first connection surface 211. As illustrated in Fig. 6A, in yoke portion 112 of second core block 110b, second end portion 112b has second connection surface 212 to which first core block 110a is connected, and recess 222 at least partially recessed from second connection surface 212.

First connection surface 211 is an end surface of first end portion 112a. Protrusion 221 is formed to protrude from first connection surface 211. Second connection surface 212 is an end surface of second end portion 112b. Recess 222 is formed by cutting out second connection surface 212.

When two stator blocks 100 among three sequentially adjacent stator blocks 100 illustrated in Figs. 4 and 5 are connected, as illustrated in Figs. 6A and 6B, two core blocks 110 in two stator blocks 100 are connected. In this case, first end portion 112a of yoke portion 112 of one core block 110 out of two stator blocks 100 and second end portion 112b of yoke portion 112 of the other core block 110 out of two stator blocks 100 are connected. Specifically, first connection surface 211 at first end portion 112a of yoke portion 112 of one core block 110 and second connection surface 212 at second end portion 112b of yoke portion 112 of the other core block 110 are brought into contact with each other. At the same time, protrusion 221 at first end portion 112a of yoke portion 112 of one core block 110 and recess 222 at second end portion 112b of yoke portion 112 of the other core block 110 are fitted to each other.

More specifically, first connection surface 211 at first end portion 112a of yoke portion 112 of second core block 110b and second connection surface 212 at second end portion 112b of yoke portion 112 of third core block 110c are brought into contact with each other. At the same time, protrusion 221 at first end portion 112a of yoke portion 112 of second core block 110b and recess 222 at second end portion 112b of yoke portion 112 of third core block 110c are fitted to each other. Similarly, first connection surface 211 at first end portion 112a of yoke portion 112 of first core block 110a and second connection surface 212 at second end portion 112b of yoke portion 112 of second core block 110b are brought into contact with each other. At the same time, protrusion 221 at first end portion 112a of yoke portion 112 of first core block 110a and recess 222 at second end portion 112b of yoke portion 112 of second core block 110b are fitted to each other. A method of fitting protrusion 221 and recess 222 will be described later.

An outline of protrusion 221 and an inner shape line of recess 222 include arcs constituting circles having the same center. That is, as illustrated in Fig. 7, when two core blocks 110 are connected, center O1 of a circle constituting protrusion 221 of one core block 110 and center O2 of a circle constituting recess 222 of the other core block 110 coincide with each other.

Protrusion 221 has a shape that can be inserted into recess 222 in a specific direction. In addition, protrusion 221 has a shape that is non-removable from recess 222 in a specific direction by being inserted into recess 222 and rotated. That is, when protrusion 221 is inserted into recess 222 from a specific direction and rotated in a direction orthogonal to the axial direction, protrusion 221 is non-removable from the specific direction (insertion direction). In the present exemplary embodiment, once protrusion 221 is inserted into recess 222 and rotated, protrusion 221 does not come off in any direction.

As described above, since protrusion 221 can be inserted into recess 222, as illustrated in Fig. 7, when a width of a portion of protrusion 221 to be inserted into recess 222 is W1 and a width (an opening width) of a portion of recess 222 into which protrusion 221 is inserted is W2, W2 ≥ W1. As illustrated in Fig. 7, when a diameter of the circle constituting protrusion 221 is φ1, φ1 > W1. When a diameter of the circle constituting recess 222 is φ2, φ2 > W2 is satisfied. Diameter φ1 of the circle constituting protrusion 221 and diameter φ2 of the circle constituting recess 222 may be φ1 = φ2, but may preferably be φ1 < φ2.

Groove 231 is formed in first end portion 112a of yoke portion 112. Groove 231 is located on an inner side of protrusion 221 (that is, on rotating shaft 21 side). Groove 231 is formed to be recessed from first connection surface 211. An inner shape line of a radially outer portion of groove 231 constitutes the outline of protrusion 221. That is, a part of the inner shape line on an outer side of groove 231 and a part of the outline of protrusion 221 coincide with each other. Groove 231 is formed to cut out first connection surface 211 in a slit shape. Groove 231 extends in an elongated shape. Specifically, groove 231 extends to curve outward. As an example, a pair of inner shape lines of groove 231 is an arc.

Projection 232 is formed at second end portion 112b of yoke portion 112. Projection 232 is located on an inner side of recess 222 (that is, on rotating shaft 21 side). Projection 232 is formed to protrude from second connection surface 212. An outline on an outer side of projection 232 constitutes the inner shape line of recess 222. That is, a part of the outline on the outer side of projection 232 and a part of the inner shape line of recess 222 coincide with each other.

Projection 232 has a shape that can be inserted into groove 231. When two core blocks 110 are connected and protrusion 221 of one core block 110 and recess 222 of the other core block 110 are fitted to each other, projection 232 and groove 231 are also fitted to each other. Thus, it is possible to suppress detachment of two connected core blocks 110. Projection 232 extends in an elongated shape. Specifically, projection 232 has a horn shape. Projection 232 extends to curve outward. As an example, a pair of outlines of projection 232 is an arc.

A tip end of projection 232 is one end of the opening width of recess 222. As illustrated in Fig. 8, when a straight line passing through center O2 of a circle constituting recess 222 and a center of stator core 11 (not illustrated) is L1, a straight line passing through a center O2 of a circle constituting recess 222 and the tip end of projection 232 is L2, and an angle formed by straight line L1 and straight line L2 is θ1, θ1 > 45° is satisfied. θ1 > 60° is preferably satisfied, and θ1 = 90° is most preferably satisfied.

As illustrated in Fig. 8, the other end of the opening width of recess 222 is preferably located at a position retracted from straight line L1. That is, when a straight line passing through the other end of the opening width of recess 222 and center O2 of the circle constituting recess 222 is L3, and an angle formed by straight line L1 and straight line L3 is θ2, θ2 is preferably larger than 0° (θ2 > 0°).

As described above, the inner shape line on an inner side (the rotating shaft 21 side) of groove 231 is an arc. As illustrated in Fig. 8, when a radius of a circle constituting the arc of the inner shape line on the inner side of groove 231 is RE, and the diameter of the circle constituting protrusion 221 is φ1, RE > φ1 is preferably satisfied. Center O3 of the circle constituting the arc of the inner shape line on the inner side of groove 231 exists at a position separated from center O1 of a circle constituting an arc of protrusion 221 by distance F on the same axis in a horizontal direction.

The outline on the outer side of projection 232 is an arc. As illustrated in Fig. 8, when a radius of a circle constituting an arc of the outline on the outer side of projection 232 is RG, RG < RE is preferably satisfied. Center O4 of the circle constituting the arc of the outline on the outer side of projection 232 exists at a position separated from center O2 of a circle constituting an arc of recess 222 by distance H on the same axis at angle θ3. In the present exemplary embodiment, distance F and distance H are the same (F = H). Angle θ3 is set according to the number (division number) of core blocks 110 constituting stator core 11. For example, in the present exemplary embodiment, stator core 11 includes 12 core blocks 110. Therefore, angle θ3 is θ3 = 360°/12 = 30°.

As illustrated in Fig. 8, first hollow 221a is formed in an outer side portion of protrusion 221. First hollow 221a is formed in a stepped shape so as to recess a part of the outer side portion of protrusion 221. First hollow 221a has an abutment surface that can abut an inner surface of recess 222 when protrusion 221 is inserted into recess 222 in the specific direction.

Second hollow 221b is formed at a position intersecting an inner side portion of protrusion 221 when first connection surface 211 is extended. Second hollow 221b is formed so as to recess a part of the inner side portion of protrusion 221. A recessed amount of second hollow 221b is smaller than that of first hollow 221a.

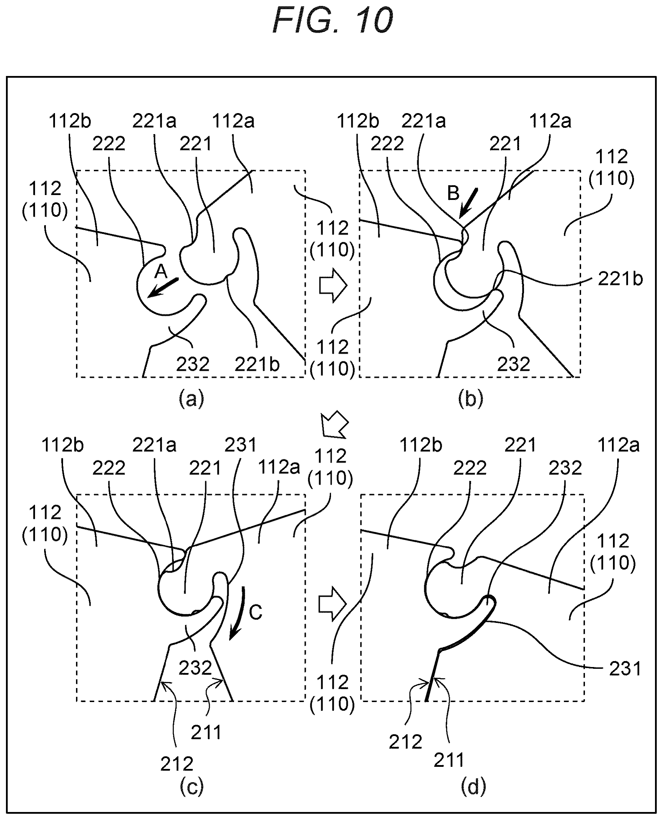

Next, a method of connecting two core blocks 110 will be described with reference to Figs. 9 and 10. Fig. 9 is a top view of two core blocks 110 when two core blocks 110 are connected. Fig. 10 is a view illustrating movement of core blocks 110 when two core blocks 110 are connected. Although only core blocks 110 are illustrated in Figs. 9 and 10, in practice, two stator blocks 100 each having coil 12 wound around core block 110 via insulator 13 are connected to each other. In this case, two coils 12 are connected by the jumper wire.

After coils 12 are sequentially wound around two core blocks 110 fixed by a fixing jig to produce a pair of stator blocks 100 in which two coils 12 are connected by the jumper wire 15, as illustrated in Fig. 9, one stator block 100 and the other stator block 100 are developed so as to rotate horizontally. Thus, two core blocks 110 are connected.

Specifically, as illustrated in a part (a) of Fig. 10, protrusion 221 of one core block 110 out of two core blocks 110 is linearly moved in a direction of arrow A, which is the specific direction, and brought close to recess 222 of the other core block 110. At this time, as illustrated in a part (b) of Fig. 10, the abutment surface of first hollow 221a formed in protrusion 221 abuts an end portion of the opening width of recess 222.

Next, as illustrated in the part (b) of Fig. 10, protrusion 221 is pushed toward recess 222 in a direction of arrow B (a direction different from the direction of arrow A). Thus, as illustrated in a part (c) of Fig. 10, protrusion 221 is inserted into recess 222 and fitted into recess 222. At this time, as illustrated in the part (b) of Fig. 10, since second hollow 221b is formed in protrusion 221, protrusion 221 can be easily fitted into recess 222. Second hollow 221b abuts the other end portion of the opening width of recess 222 at the same time that first hollow 221a formed in protrusion 221 abuts one end portion of the opening width of recess 222. However, this is not limited thereto.

Next, as illustrated in the part (c) of Fig. 10, core block 110 (the core block on the right side in Fig. 10) having protrusion 221 fitted into recess 222 is horizontally rotated in a direction of arrow C. Thus, protrusion 221 inserted into recess 222 rotates, and projection 232 formed on the inner side of recess 222 is rotated and inserted into groove 231 formed on an inside of protrusion 221. At the same time, first connection surface 211 of one core block 110 and second connection surface 212 of the other core block 110 are brought into surface contact with and abut each other. Thus, two core blocks 110 are locked by protrusion 221 inserted into recess 222, to be connected in a state of not being detached. In a state illustrated in a part (d) of Fig. 10, protrusion 221 inserted into recess 222 is non-removable from recess 222 in the direction of arrow A (specific direction) illustrated in the part (a) of Fig. 10.

As described above, two core blocks 110 are connected by fitting protrusion 221 with recess 222, fitting groove 231 with projection 232, and engaging and locking the protrusion 221 with the recess 222, and groove 231 with projection 232. Thus, two stator blocks 100 in which two coils 12 wound around two core blocks 110 are connected by jumper wire 15 can be connected.

Two core blocks 110 can be separated by rotating protrusion 221 in a direction opposite to the direction of arrow C and sliding protrusion 221 in a direction opposite to the direction of arrow A. That is, two core blocks 110 can be separated by performing an operation opposite to an operation illustrated in Fig. 10.

As described above, in core block 110 according to the present exemplary embodiment, protrusion 221 is provided at first end portion 112a of yoke portion 112, and recess 222 is provided at second end portion 112b of yoke portion 112. Then, protrusion 221 has a shape that can be inserted into recess 222 in the specific direction (direction of arrow A in the part of (a) of Fig. 10), and has a shape that is non-removable from recess 222 in the specific direction by being rotated after being inserted into recess 222.

With this configuration, when connecting two core blocks 110, the plurality of core blocks 110 can be connected without sliding in a thickness direction (an up-down direction) of core blocks 110. Thus, jumper wire 15 between coils 12 wound around two core blocks 110 can be shortened. Therefore, wire processing of jumper wire 15 is facilitated, and risk of occurrence of a withstand voltage failure can be reduced. Moreover, by shortening jumper wire 15, double bobbin winding, which is one of methods of high space winding, can be easily employed. Therefore, a space factor of coil 12 can be improved. By shortening jumper wire 15, a use amount of the conductive wire constituting coil 12 can be reduced to achieve cost reduction.

In a case where core block 110 is formed by stacking a plurality of punched steel plates, when core block 110 is slid in the thickness direction of core blocks 110 to connect two core blocks 110 as in the conventional case, it is necessary to connect two core blocks 110 while paying attention to a direction of burr generated at an end portion of the steel plate. That is, depending on the direction of the burr generated at the end portion of the steel plate, when core block 110 is slid in the thickness direction, the burr may be caught and two core blocks 110 may not be able to be connected. In contrast, in core block 110 according to the present exemplary embodiment, two core blocks 110 can be connected without sliding in the thickness direction of core blocks 110. Therefore, it is possible to easily connect two core blocks 110 without considering the direction of the burr of the steel plate. That is, assembly workability can be improved.

### (Modifications)

The present disclosure has been described above based on the exemplary embodiment. However, the present disclosure is not limited to the above exemplary embodiment.

For example, in the above exemplary embodiment, stator block connection structure 101 is formed by connecting two stator blocks 100. However, this is not limited thereto. Specifically, stator block connection structure 101 may be formed by connecting three or more stator blocks 100.

Further, in the above exemplary embodiment, stator 10 includes molding resin 14. However, this is not limited thereto. That is, stator 10 may not include molding resin 14.

Further, in the above exemplary embodiment, rotor 20 is an IPM rotor. However, this is not limited thereto. For example, rotor 20 may be a surface permanent magnet (SPM) rotor in which a plurality of permanent magnets are provided on an outer surface of the rotor core.

Further, in the above exemplary embodiment, motor 1 has 10 poles and 12 slots. However, this is not limited thereto. That is, the number of slots of stator 10 is not limited to 12. The number of magnetic poles of rotor 20 is not limited to 10 (that is, the number of permanent magnets 23 is not limited to 10). Any number of slots of stator 10 and any number of magnetic poles of rotor 20 can be applied.

In addition, the present disclosure also includes forms obtained by applying various modifications conceived by those skilled in the art to the above exemplary embodiments and modifications, or a form realized by arbitrarily combining components and functions in the above exemplary embodiments without departing from the gist of the present disclosure.

### INDUSTRIAL APPLICABILITY

The technology of the present disclosure can be widely used for a motor, electric appliances including the motor, and the like.

### REFERENCE MARKS IN THE DRAWINGS

1: motor
10: stator
11: stator core
11a: tooth
11b: yoke
11c: slot
12: coil
12a: first coil
12b: second coil
12c: third coil
13: insulator
13a: first insulator
13b: second insulator
13c: third insulator
14: mold resin
15: jumper wire
20: rotor
21: rotating shaft
22: rotor core
23: permanent magnet
30: first bearing
40: second bearing
50: first bracket
50a: recess
50b: through-hole
51: bracket protruding portion
51a: bracket top plate portion
51b: bracket side plate portion
52: heat dissipation fin
60: second bracket
60a: recess
70: first cover
70a: through-hole
71: outer protruding portion
72: inner top plate portion
73: inner side plate portion
80: second cover
80a: through-hole
81: inner protruding portion
82: outer top plate portion
83: outer side plate portion
100: stator block
100a: first stator block
100b: second stator block
100c: third stator block
101: stator block connection structure
110: core block
110a: first core block
110b: second core block
110c: third core block
111: tooth portion
112: yoke portion
112a: first end portion
112b: second end portion
211: first connection surface
212: second connection surface
221: protrusion
221a: first hollow
221b: second hollow
222: recess
231: groove
232: projection

## Claims

1. A core block in a stator core in which a plurality of core blocks sequentially adjacent including a first core block, a second core block, and a third core block are annularly connected, the core block comprising:
a yoke portion extending in a circumferential direction of the stator core; and
a tooth portion extending from the yoke portion toward a center of the stator core, wherein
the yoke portion includes a first end portion that is one end portion in the circumferential direction and a second end portion that is the other end portion in the circumferential direction,
the first end portion includes a first connection surface to which the first core block adjacent among the plurality of core blocks is connected, and a protrusion at least partially protruding from the first connection surface,
the second end portion includes a second connection surface to which the third core block adjacent among the plurality of core blocks is connected, and a recess at least partially recessed from the second connection surface,
an outline of the protrusion and an inner shape line of the recess include arcs constituting circles having a same center, and
the protrusion has a shape that is insertable into the recess in a specific direction, and has a shape that is non-removable from the recess in the specific direction by being inserted into the recess and rotated.

2. The core block according to Claim 1, wherein when a diameter of a circle constituting the protrusion is φ1 and a width of a portion of the protrusion inserted into the recess is W1, φ1 > W1 is satisfied.

3. The core block according to Claim 1, wherein when a diameter of a circle constituting the recess is φ2 and a width of a portion of the recess into which the protrusion is inserted is W2, φ2 > W2 is satisfied.

4. The core block according to Claim 1, wherein
the first end portion is formed with a groove located on an inner side of the protrusion and recessed from the first connection surface,
an inner shape line of an outer side portion of the groove forms an outline of the protrusion,
the second end portion is formed with a projection located on an inner side of the recess and protruding from the second connection surface,
an outline of an outer side portion of the projection forms an inner shape line of the recess, and
the projection has a shape that is insertable into the groove.

5. The core block according to Claim 4, wherein the groove and the projection extend outward in a curved manner.

6. The core block according to Claim 5, wherein
an inner shape line on an inner side of the groove is an arc, and
when a radius of a circle constituting the arc of the inner shape line on the inner side of the groove is RE and a diameter of a circle constituting the protrusion is φ1, RE > φ1 is satisfied.

7. The core block according to Claim 6, wherein
an outline on an outer side of the projection is an arc, and
when a radius of a circle constituting the arc of the outline on the outer side of the projection is RG, RG < RE is satisfied.

8. The core block according to any one of Claims 4 to 7, wherein
a tip end of the projection is one end of an opening width of the recess, and
when a straight line passing through a center of a circle constituting the recess and a center of the stator core is L1, a straight line passing through the center of the circle constituting the recess and the tip end of the projection is L2, and an angle formed by the L1 and the L2 is θ1, θ1 > 45° is satisfied.

9. The core block according to Claim 8, wherein the other end of the opening width of the recess is located at a position retracted from the L1.

10. The core block according to any one of Claims 1 to 7, wherein a first hollow is formed in an outer side portion of the protrusion, and
the first hollow has an abutment surface that can abut an inner surface of the recess when the protrusion is inserted into the recess in the specific direction.

11. The core block according to any one of Claims 1 to 7, wherein a second hollow is formed at a position intersecting an inner side portion of the protrusion when the first connection surface is extended.

12. A stator core formed by multiple connection of the core blocks according to any one of Claims 1 to 7, wherein the plurality of core blocks are connected by fitting the recess of the first core block out of two adjacent core blocks and the protrusion of the second core block out of the two adjacent core blocks.

13. A motor comprising:
a stator including the stator core according to Claim 12; and
a rotor that rotates by a magnetic force of the stator.
